# EUROPÄISCHE PATENTSCHRIFT

(11) **EP 0 464 757 B1**
(45) Veröffentlichungstag und Bekanntmachung des Hinweises auf die Patenterteilung: **15.05.1996**
(21) Anmeldenummer: 91110899.1
(22) Anmeldetag: 01.07.1991
(51) Int. Cl.: C04B 35/00, C04B 35/66

(54) **Verfahren zur Herstellung eines silikatisch gebundenen Werkstoffs**
Process for the production of silicate-bonded material
Procédé pour la préparation de matériaux liés par silicate

(30) Priorität: 04.07.1990 DE 4021288
(43) Veröffentlichungstag der Anmeldung: 08.01.1992
(73) Patentinhaber: Hoechst CeramTec Aktiengesellschaft, D-95100 Selb (DE)
(72) Erfinder: Schulze, Gisbert, W-8560 Lauf (DE)
(74) Vertreter: Hoffmann, Peter, Dipl.-Chem.

(56) Entgegenhaltungen:
- EP-A- 0 354 304
- EP-A- 0 378 275
- FR-A- 2 478 073
- GB-A- 2 143 515
- US-A- 3 585 056
- US-A- 4 265 669
- US-A- 4 348 236
- ACCESSION NUMBER 85-233130 (Week 38) World Patents Index (latest) DERWENT PUBLICATIONS LTD, London, GB

## Beschreibung

Die vorliegende Erfindung betrifft ein Verfahren zur Herstellung eines keramischen Formkörpers auf Silikatbasis oder Aluminiumoxid-Basis unter Verwendung einer Glasfritte.

Neben der hohen Temperaturbeständigkeit keramischer Werkstoffe ist eine der herausragenden Eigenschaften ihre elektrische Isolierfähigkeit. In manchen Fällen ist darüberhinaus noch eine gute mechanische Festigkeit, insbesondere Biegefestigkeit erwünscht.

Technische Keramiken auf Silikatbasis und Aluminiumoxid-Basis werden in der Regel während des Brennvorganges unter Ausbildung einer Glasphase dichtgesintert.

Für die Ausbildung der Glasphase werden üblicherweise Feldspäte und Nephelin Syenite sowie in selteneren Fällen Erdalkaliverbindungen (wie Bariumcarbonat) in den Versatz eingeführt. Diese Komponenten bilden beim Erhitzen allein oder durch Reaktionen mit anderen Versatzkomponenten Schmelzen, die beim Abkühlen glasig erstarren.

Die elektrischen Eigenschaften solcher Werkstoffe, vor allem bei höheren Temperaturen, hängen stark von der Menge der im Werkstoff vorhandenen Alkaliionen ab.

Die Feldspäte sind zwar billig; ihr großer Nachteil ist aber der hohe Alkaligehalt der Glasphase. Vor allem bei erhöhten Temperaturen werden die elektrischen Eigenschaften, insbesondere der spezifische Durchgangswiderstand von Keramiken, die auf Feldspatbasis dichtgesintert wurden, stark negativ beeinflußt.

Will man Produkte mit guten elektrischen Eigenschaften, insbesondere mit niedrigen dielektrischen Verlusten bei höheren Temperaturen, so muß man entweder die Glasphase gering halten und/oder die alkalihaltigen Flußmittel durch erdalkalihaltige ersetzen (vergleiche Horst Scholze, "Die pysikalischen und chemischen Grundlagen der Keramik", Springer Verlag 1968).

Die Biegefestigkeit silikatisch gebundener Keramiken wird auch von der Art und Menge der gebildeten Glasphase beeinflußt. Reaktivität, Viskosität beim Sintern, Benetzungsverhalten und der thermische Ausdehnungskoeffizent der Glasphase sowie deren mechanische Festigkeit wirken sich auf die Festigkeit des gebrannten Körpers aus.

Es bestand daher die Aufgabe, die elektrischen Eigenschaften, insbesondere den spezifischen Durchgangswiderstand bei hohen Temperaturen und die Biegefestigkeit, von silikatischen Werkstoffen (und Aluminiumoxid-Werkstoffen) der technischen Keramik über das bekannte Niveau hinaus anzuheben.

Die Erfindung beruht auf der Beobachtung, daß sich durch vollständigen oder teilweisen Ersatz von Feldspat und Nephelin Syenit durch Glasfritten, insbesondere Fritten alkalifreier Gläser, die gewünschten Eigenschaften verbessern lassen.

Es wurde nun ein Verfahren zur Herstellung eines keramischen Formkörpers auf Silikatbasis oder Aluminiumoxid-Basis gefunden, bei dem man ein keramisches Ausgangsprodukt, das Ton, Kaolin, Speckstein und/oder Tonerde enthält, mit einem silikathaltigen Flußmittel vermischt, die Mischung zu einem Formkörper verformt, den Formkörper erhitzt und bei Temperaturen von oberhalb 1.100°C, vorzugsweise 1.200 - 1.450°C, insbesondere 1.280 - 1.350°C, dichtsintert. Dieses Verfahren ist dadurch gekennzeichnet, daß das eingesetzte Flußmittel mindestens teilweise aus einer Glasfritte besteht. Vorzugsweise ist die eingesetzte Glasfritte alkalifrei. Bei geringeren Anforderungen an den spezifischen Widerstand bei hohen Temperaturen kann das verwendete Flußmittel neben der Glasfritte noch mindestens einen alkalihaltigen Feldspat oder Nephelin Syenit enthalten.

Glasfritten sind erstarrte Glasschmelzen, die in der Regel durch Abschrecken in Wasser erzeugt werden und in Form von Glasschuppen oder feiner Mahlungen Ausgangsmaterialien für Glasuren oder ähnliche Anwendungen darstellen. Glasfritten sind also zerkleinertes Glas und können sowohl alkalihaltig als auch alkalifrei sein. Der Alkaligehalt der verwendeten Fritte richtet sich nach den Anforderungen, die an den Werkstoff gestellt werden. Alkalifreie Fritten werden eingesetzt, wenn bei hohen Temperaturen, wie z.B. 600°C, ein möglichst hoher spezifischer Durchgangswiderstand gewünscht wird. Bei den alkalihaltigen Fritten sind lithiumfreie bevorzugt. Der Erweichungsbeginn der eingesetzten Glasphase liegt oberhalb 850°C, vorzugsweise oberhalb 895°C.

Das Verformen der Mischung zu einem Formkörper geschieht in an sich bekannter Weise, beispielsweise durch Herstellung eines wäßrigen Schlickers, wobei die Form des grünen Körpers durch Aufsaugen der flüssigen Phase an einer porösen Gipsform entsteht, oder durch Strangpressen einer mit organischen Plastifiziermitteln versehenen keramischen Masse.

Nach dem erfindungsgemäßen Verfahren läßt sich ein Porzellan herstellen, wenn das Ausgangsprodukt Kaolin, Quarz und Feldspat enthält. Bei Herstellung von Tonerdeporzellanen muß darüber hinaus auch Tonerde vorhanden sein. Durch Zugabe von Feldspat werden dichte Körper erhalten. Nach dem erfindungsgemäßen Verfahren lassen sich auch Formkörper aus Aluminiumsilikat, die also kein Magnesiumoxid enthalten, herstellen. Insbesondere lassen sich auf diese Weise Werkstoffe auf Aluminiumsilikat-Basis erhalten, die Mullit-Keramiken sind. In diesem Fall enthält das Gemisch der Ausgangsprodukte mindestens 50 Gew.-%, insbesondere 50 bis 80 Gew.-% Al₂O₃.

Dichte, aber auch poröse Werkstoffe der technischen Keramik mit silikatischen Versatzanteilen der C-Gruppen 100, 200, 400, 500 und 600, und mit Einschränkungen bis hin zum hochprozentigen Aluminiumoxid, enthalten in der Regel verschieden hohe Anteile an Versatzkomponenten, die im Brand Glasphasen bilden.

Der Ersatz von Feldspat und/oder Nephelin Syenit durch alkalifreie Glasfritte wirkt sich auf den spezifischen Durchgangswiderstand bei hohen Temperaturen günstig aus. Für die Steigerung der Biegefestigkeit ist es dagegen sinnvoll, wenn der ursprünglich im Versatz vorhandene Feldspat bzw. Nephelin Syenit nicht vollständig, sondern nur teilweise durch die Glasfritte ersetzt wird.

Vorzugsweise beträgt der Anteil an Glasfritte im grünen Formkörper 0,2 bis 20 Gew.-%, insbesondere 6 bis 13 Gew.-%.

Das alkalihaltige Flußmittel Nephelin Syenit ist ein Gestein, das in der Hauptsache aus Nephelin besteht und darüber hinaus noch 0 bis 50 Gew.-% anderer alkalischer Feldspäte enthält.

Es ist bevorzugt, wenn das eingesetzte Flußmittel noch mindestens eine Komponente enthält, die Erdalkalioxid liefert, beispielsweise Wollastonit, Dolomit, Marmor, Bariumkarbonat, Strontiumcarbonat oder Speckstein. Bevorzugt ist der Einsatz der Flußmittel-Komponente BaCO₃. Titandioxid kann als weitere Komponente dem Flußmittel zugesetzt werden. Das Gewichtsverhältnis (Feldspat + Nephelin Syenit)/Glasfritte beträgt vorzugsweise 0:1 bis 0,7:1.

Für viele elektrische Anwendungsgebiete werden mehr und mehr Werkstoffe eingesetzt, die hohe Anteile an Tonerde aufweisen, da die Festigkeit von Porzellan und Sondersteastit häufig nicht mehr ausreichend ist. Die Montage vieler Artikel erfolgt heute mit Automaten, die größere Festigkeitsreserven des Materials, z.B. beim Nieten, verlangen. Mit dem erfindungsgemäßen Verfahren können solche Werkstoffe hergestellt werden, auch aus Porzellan und Sondersteatit.

Die große Gruppe der Tonerdeporzellane mit Al₂O₃-Gehalten bis ca. 85 % erfüllt häufig nicht die elektrischen Anforderungen, bedingt durch ihren (im Vergleich zu Sondersteatit oder hochprozentigem Aluminiumoxid) höheren Alkaligehalt oder sie erfordern bereits erheblich höhere Brenntemperaturen als Sondersteatit, wenn alkalihaltige Flußmittel reduziert oder, z. B. durch Erdalkaliverbindungen, ersetzt werden.

Ein Zusatz von 0,5 % alkalifreier Fritte zu einem porösen Versatz der Gruppe C520 (gemäß DIN VDE 0335, Teil 3) steigert die Biegefestigkeit.

Um bei Werkstoffen der Gruppen C610, C620 oder C780 einen spez. Durchgangswiderstand von über 10⁷ Ohm cm bei 600°C zu erreichen, muß der Alkaligehalt im Versatz unter 1 Gew.-% M₂O liegen.

Durch den erfindungsgemäßen Ersatz der Alkaliträger Feldspat und Nephelin Syenit gegen Glasfritte, insbesondere die Fritte von alkalifreien Gläsern können viele traditionelle Werkstoffe der technischen Keramik mit niedrigem Al₂O₃-Gehalt, insbesondere die C-Gruppe 600 gemäß DIN VDE 0335, Teil 3, in ihren Eigenschaften soweit verbessert werden, daß sie für viele Anwendungen geeignet sind, die sonst von hochprozentigem Aluminiumoxid abgedeckt werden. Von Vorteil ist dabei, daß diese Massen erheblich niedrigere Brenntemperaturen erlauben und niedrigere Rohstoffkosten aufweisen, da ihr Gehalt an Aluminiumoxid niedriger ist als bei Al₂O₃-Werkstoffen mit hohem Al₂O₃-Gehalt.

Durch die mit dem erfindungsgemäßen Verfahren erreichbare Steigerung der mechanischen Festigkeit können z.B. diverse Maschinenbauteile bei billigeren Rohstoff- und Brennkosten gefertigt werden. Durch die Einhaltung eines geringen Alkaligehaltes wird das Einsatzgebiet für elektrische Anwendungen erweitert, wie z.B. für Zündelektroden.

Wie oben erwähnt, kann das keramische Ausgangsprodukt 0,2 bis 20 Gew.-% einer Glasfritte enthalten. Darüber hinaus kann es 0 bis 12 Gew.-% (Feldspat + Nephelin Syenit), 0 bis 5 Gew.-% Speckstein und jeweils 0 bis 3 Gew.-% Wollastonit, Dolomit, Marmormehl, Bariumcarbonat und Titandioxid enthalten. Die Gesamtmenge an Flußmittel, d.h. Sinterhilfsmittel, soll jedoch maximal 30 Gew.-% nicht übersteigen. Die Verwendung von Dolomit, Marmor, Wollastonit, Bariumcarbonat, Feldspat und Nephelin Syenit ist aus der DE-PS 29 32 914 bekannt.

Mit dem erfindungsgemäßen Verfahren lassen sich keramische Formkörper mit sehr günstigen Eigenschaften herstellen. Sie bestehen aus einer Glasphase und einem im wesentlichen Al₂O₃ enthaltenden kristallinen Anteil. Insbesondere beträgt der Anteil der Glasphase 22-34 Gew.-% und diese besteht aus 50-68 Gew.-% SiO₂, 12-22 % Al₂O₃, 0,1-4,5 % Fe₂O₃, 0,1-13 % TiO₂, 0,1-23 % CaO, 0,1-9 % MgO, 0-7 % Na₂O, 0-11 % K₂O, 0-9 % BaO und 0-23 % B₂O₃ und der kristalline Anteil besteht aus 10-25 % SiO₂, 70-80 % Al₂O₃, 0,1-1 % Fe₂O₃, 0,1-3 % TiO₂, 0,1-5 % CaO, 0,1-2 % MgO, 0-1,5 % Na₂O, 0-2,5 % K₂O, 0-2 % BaO und 0-5 % B₂O₃.

Die Erfindung wird durch die folgenden Beispiele erläutert.

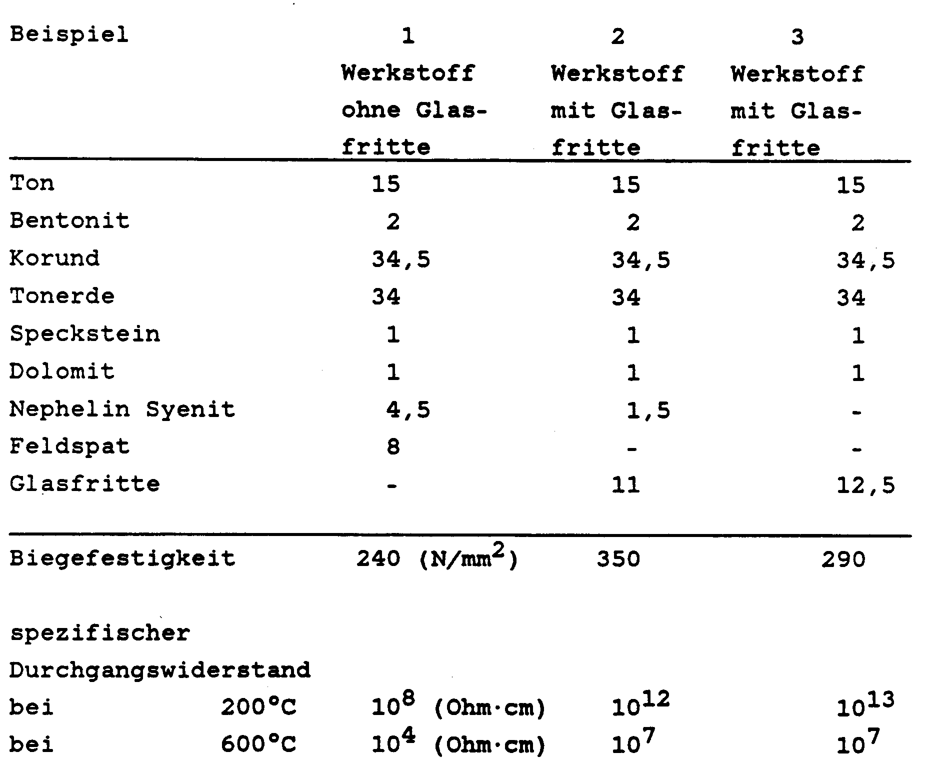

Beispiel 1 ist ein Vergleichsbeispiel, Beispiele 2 und 3 sind erfindungsgemäß.

In den Beispielen 2 und 3 wurde eine Borglas-Fritte eingesetzt mit Gew.-Anteilen von 33 % SiO₂, 9,4 % Al₂O₃, 32 % B₂O₃ und 26 % CaO. Die Halbkugeltemperatur betrug 960°C, der thermische Ausdehnungskoeffizient (20/400°C) betrug 6,6 x 10⁻⁶/K. Die höchste Biegefestigkeit wurde in Beispiel 2 erreicht, in dem - gegenüber Beispiel 1 - Feldspat völlig und Nephelin Syenit teilweise durch Borglas der angegebenen Zusammensetzung ersetzt wurde. Bei einem völligen Ersatz durch Borglas steigt zwar der spezifische Durchgangswiderstand bei 200°C, jedoch nimmt die Biegefestigkeit wieder etwas ab.

In den Beispielen 4 und 5 wurde eine Glasfritte eingesetzt, die 56 % SiO₂, 11 % Al₂O₃, 23 % B₂O₃, 5,5 % CaO und 5 % BaO (jeweils Gew.-%) enthielt. Die Halbkugeltemperatur der Glasfritte betrug 1280°C. Der thermische Ausdehnungskoeffizient (20/400°C) betrug nur 4 · 10⁻⁶/K.

| Beispiel | 4 Werkstoff ohne Glasfritte | 5 Werkstoff mit Glasfritte |
|---|---|---|
| Ton | 10 | 10 |
| Speckstein | 2 | 2 |
| Wollastonit | 1 | 1 |
| Nephelin Syenit | 6 | 7 |
| Feldspat | 11 | - |
| Tonerde | 70 | 70 |
| Glasfritte | - | 10 |
| Biegefestigkeit | 200 (N/mm²) | 330 |

Beispiel 4 ist ein Vergleichsbeispiel. Beispiel 5 ist erfindungsgemäß. Durch den völligen Ersatz von Feldspat durch Glasfritte steigt die Biegefestigkeit deutlich an.

## Patentansprüche

1. Keramischer Formkörper bestehend aus einer Glasphase und einem im wesentlichen Al₂O₃ enthaltenden kristallinen Anteil, dadurch gekennzeichnet, daß der Anteil der Glasphase 22-34 Gew.-% beträgt und aus 50-68 Gew.-% SiO₂, 12-22 % Al₂O₃, 0,1-4,5 % Fe₂O₃, 0,1-13 % TiO₂, 0,1-23 % CaO, 0,1-9 % MgO, 0-7 % Na₂O, 0-11 % K₂O, 0-9 % BaO und 0-23 % B₂O₃ und der kristalline Anteil aus 10-25 % SiO₂, 70-80 % Al₂O₃, 0,1-1 % Fe₂O₃, 0,1-3 % TiO₂, 0,1-5 % CaO, 0,1-2 % MgO, 0-1,5 % Na₂O, 0-2,5 % K₂O, 0-2 % BaO und 0-5 % B₂O₃ besteht und daß der Formkörper eine Biegefestigkeit von ≧ 290 N/mm² aufweist.

2. Keramischer Formkörper bestehend aus einer Glasphase und einem im wesentlichen Al₂O₃ enthaltenden kristallinen Anteil, dadurch gekennzeichnet, daß der Anteil der Glasphase 22-34 Gew.-% beträgt und aus 50-68 Gew.-% SiO₂, 12-22 % Al₂O₃, 0,1-4,5 % Fe₂O₃, 0,1-13 % TiO₂, 0,1-23 % CaO, 0,1-9 % MgO, 0-7 % Na₂O, 0-11 % K₂O, 0-9 % BaO und 0-23 % B₂O₃ und der kristalline Anteil aus 10-25 % SiO₂, 70-80 % Al₂O₃, 0,1-1 % Fe₂O₃, 0,1-3 % TiO₂, 0,1-5 % CaO, 0,1-2 % MgO, 0-1,5 % Na₂O, 0-2,5 % K₂O, 0-2 % BaO und 0-5 % B₂O₃ besteht. und daß der Formkörper einen spezifischen Durchgangswiderstand von ≧ 10¹² Ω·cm, gemessen bei einer Temperatur von 200 °C, und einen spezifischen Durchgangswiderstand von ≧ 10⁷ Ω·cm, gemessen bei einer Temperatur von 600 °C, aufweist.

3. Verfahren zur Herstellung eines keramischen Formkörpers auf Silikatbasis oder Aluminiumoxid-Basis gemäß Anspruch 1 oder 2, wobei man ein keramisches Ausgangsprodukt, das Ton, Kaolin, Speckstein und/oder Tonerde enthält mit einem silikathaltigen Flußmittel vermischt, die Mischung zu einem Formkörper verformt und den Formkörper erhitzt und bei Temperaturen oberhalb 1.100°C dicht sintert, dadurch gekennzeichnet, daß das eingesetzte Flußmittel mindestens teilweise aus einer Glasfritte besteht, deren Erweichungsbeginn oberhalb 850°C liegt.

4. Verfahren gemäß Anspruch 3, dadurch gekennzeichnet, daß die eingesetzte Glasfritte alkalifrei ist.

5. Verfahren nach Anspruch 3 oder 4, dadurch gekennzeichnet, daß das silikathaltige Flußmittel mindestens einen alkalihaltigen Feldspat enthält.

6. Verfahren nach Anspruch 5, dadurch gekennzeichnet, daß das silikathaltige Flußmittel Nephelin Syenit enthält.

7. Verfahren nach Anspruch 4, dadurch gekennzeichnet, daß die alkalifreie Glasfritte ein Borsilikatglas ist.

8. Verfahren nach Anspruch 7, dadurch gekennzeichnet, daß der Anteil des alkalifreien Borsilikatglases 0,2 bis 20 Gew.-%, insbesondere 6 bis 10 Gew.-% der Ausgangsmischung beträgt.

9. Verfahren nach Anspruch 3, dadurch gekennzeichnet, daß der zu erhitzende grüne Formkörper 0,2 bis 20 Gew.-%, insbesondere 6 bis 13 Gew.-%, Glasfritte als Flußmittel enthält.

10. Verfahren nach Anspruch 3, dadurch gekennzeichnet, daß das eingesetzte Flußmittel mindestens eine der Komponenten Speckstein, Wollastonit, Dolomit, Marmor, Bariumcarbonat und Titandioxid enthält.

11. Verfahren nach Anspruch 3, dadurch gekennzeichnet, daß man die Zusammensetzung des Gemisches der Ausgangsprodukte so wählt, daß ein Körper aus Porzellan oder Aluminiumsilikat entsteht.

12. Verfahren nach Anspruch 3, dadurch gekennzeichnet, daß das Gemisch der Ausgangsprodukte mindestens 50 Gew.-% Al₂O₃ enthält.

13. Verfahren nach Anspruch 12, dadurch gekennzeichnet, daß die Zusammensetzung des Ausgangsprodukts 80 bis 99 Gew.-%, insbesondere 80 bis 96 Gew.-%, Al₂O₃ enthält.

14. Verfahren nach Anspruch 12, dadurch gekennzeichnet, daß man die Zusammensetzung des Gemischs der Ausgangsprodukte so wählt, daß ein Körper aus Mullit entsteht.

15. Verfahren nach Anspruch 3, dadurch gekennzeichnet, daß der Formkörper bei Temperaturen von 1.200 bis 1.450°C, vorzugsweise 1.280 bis 1.350°C gesintert wird.

## Claims

1. A ceramic molded article comprising a glass phase and a crystalline portion substantially containing Al₂O₃, wherein the glass phase content is 22-34% by weight and comprises 50-68% by weight of SiO₂, 12-22% of Al₂O₃, 0.1-4.5% of Fe₂O₃, 0.1-13% of TiO₂, 0.1-23% of CaO, 0.1-9% of MgO, 0-7% of Na₂O, 0-11% of K₂O, 0-9% of BaO and 0-23% of B₂O₃ and the crystalline portion comprises 10-25% of SiO₂, 70-80% of Al₂O₃, 0.1-1% of Fe₂O₃, 0.1-3% of TiO₂, 0.1-5% of CaO, 0.1-2% of MgO, 0-1.5% of Na₂O, 0-2.5% of K₂O, 0-2% of BaO and 0-5% of B₂O₃ and the molded article has a bending strength of ≧ 290 N/mm².

2. A ceramic molded article comprising a glass phase and a crystalline portion substantially containing Al₂O₃, wherein the glass phase content is 22-34% by weight and comprises 50-68% by weight of SiO₂, 12-22% of Al₂O₃, 0.1-4.5% of Fe₂O₃, 0.1-13% of TiO₂, 0.1-23% of CaO, 0.1-9% of MgO, 0-7% of Na₂O, 0-11% of K₂O, 0-9% of BaO and 0-23% of B₂O₃ and the crystalline portion comprises 10-25% of SiO₂, 70-80% of Al₂O₃, 0.1-1% of Fe₂O₃, 0.1-3% of TiO₂, 0.1-5% of CaO, 0.1-2% of MgO, 0-1.5% of Na₂O, 0-2.5% of K₂O, 0-2% of BaO and 0-5% of B₂O₃ and the molded article has a volume resistivity of ≧ 10¹² Ω·cm, measured at a temperature of 200°C, and a volume resistivity of ≧ 10⁷ Ω·cm, measured at a temperature of 600°C.

3. A process for the preparation of a ceramic molded article based on silicate or based on alumina as claimed in claim 1 or 2, in which a ceramic starting material containing clay, kaolin, steatite and/or alumina is mixed with a silicate-containing flux, the mixture is shaped into a molded article and the molded article is heated and dense-sintered at temperatures above 1,100°C, wherein at least some of the flux used is composed of a glass frit whose onset of softening is above 850°C.

4. The process as claimed in claim 3, wherein the glass frit used is free of alkali metals.

5. The process as claimed in claim 3 or 4, wherein the silicate-containing flux contains at least one alkali metal-containing feldspar.

6. The process as claimed in claim 5, wherein the silicate-containing flux contains nepheline syenite.

7. The process as claimed in claim 4, wherein the alkali metal-free glass frit is a borosilicate glass.

8. The process as claimed in claim 7, wherein the alkali metal-free borosilicate glass content is from 0.2 to 20% by weight, in particular from 6 to 10% by weight of the starting mixture.

9. The process as claimed in claim 3, wherein the green molded article to be heated contains from 0.2 to 20% by weight, in particular from 6 to 13% by weight, of glass frit as the flux.

10. The process as claimed in claim 3, wherein the flux used contains at least one of the components steatite, wollastonite, dolomite, marble, barium carbonate and titanium dioxide.

11. The process as claimed in claim 3, wherein the composition of the mixture of the starting materials is selected such that an article made of porcelain or aluminum silicate is formed.

12. The process as claimed in claim 3, wherein the mixture of the starting materials contains at least 50% by weight of Al₂O₃.

13. The process as claimed in claim 12, wherein the composition of the starting material contains from 80 to 99% by weight, in particular from 80 to 96% by weight, of Al₂O₃.

14. The process as claimed in claim 12, wherein the composition of the mixture of the starting materials is selected such that a mullite article is formed.

15. The process as claimed in claim 3, wherein the molded article is sintered at temperatures of from 1,200 to 1,450°C, preferably from 1,280 to 1,350°C.

## Revendications

1. Corps façonné en céramique constitué d'une phase vitreuse et d'une portion cristalline contenant essentiellement Al₂O₃, caractérisé en ce que le taux en phase vitreuse est de 22 à 34% en poids et elle se compose de 50 à 68% en poids de SiO₂, de 12 à 22% d'Al₂O₃, de 0,1 à 4,5% de Fe₂O₃, de 0,1 à 13% de TiO₂, de 0,1 à 23% de CaO, de 0,1 à 9% de MgO, de 0 à 7% de Na₂O, de 0 à 11% de K₂O, de 0 à 9% de BaO et de 0 à 23% de B₂O₃ et la portion cristalline se compose de 10 à 25% de SiO₂, de 70 à 80% d'Al₂O₃, de 0,1 à 1% de Fe₂O₃, de 0,1 à 3% de TiO₂, de 0,1 à 5% de CaO, de 0,1 à 2% de MgO, de 0 à 1,5% de Na₂O, de 0 à 2,5% de K₂O, de 0 à 2% de BaO et de 0 à 5% de B₂O₃ et en ce que le corps façonné présente une résistance au pliage ≧ 290 N/mm².

2. Corps façonné en céramique composé d'une phase vitreuse et d'une portion cristalline contenant essentiellement Al₂O₃ caractérisé en ce que le taux en phase vitreuse est de 22 à 34% en poids et elle se compose de 50 à 68% en poids de SiO₂, de 12 à 22% d'Al₂O₃, de 0,1 à 4,5% de Fe₂O₃, de 0,1 à 13% de TiO₂, de 0,1 à 23% de CaO, de 0,1 à 9% de MgO, de 0 à 7% de Na₂O, de 0 à 11% de K₂O, de 0 à 9% de BaO et de 0 à 23% de B₂O₃ et la portion cristalline se compose de 10 à 25% de SiO₂, de 70 à 80% d'Al₂O₃, de 0,1 à 1% de Fe₂O₃, de 0,1 à 3% de TiO₂, de 0,1 à 5% de CaO, de 0,1 à 2% de MgO, de 0 à 1,5% de Na₂O, de 0 à 2,5% de K₂O, de 0 à 2% de BaO et de 0 à 5% de B₂O₃ et que le corps façonné a une résistance interne spécifique de ≧ 10¹² Ω·cm, mesurée à une température de 200°C et une résistance interne spécifique de ≧ 10⁷ Ω·cm, mesurée à une température de 600°C.

3. Procédé pour la préparation d'un corps façonné en céramique à base de silicates ou d'oxyde d'aluminium selon la revendication 1 ou 2, en mélangeant un produit céramique de départ qui contient de l'argile, du kaolin, du stéatite et/ou de l'alumine, avec un fondant silicaté, en façonnant le mélange pour obtenir un corps façonné et en chauffant le corps façonné et en frittant à densité maximale à des températures supérieures à 1 100°C, caractérisé en ce que le fondant utilisé se compose d'au moins une fritte de verre dont le ramollissement commence à une température supérieure à 850°C.

4. Procédé selon la revendication 3, caractérisé en ce que la fritte de verre utilisée est exempte d'alcalis.

5. Procédé selon la revendication 3 ou 4, caractérisé en ce que le fondant silicaté contient au moins un feldspath alcalin.

6. Procédé selon la revendication 5, caractérisé en ce que le fondant silicaté contient la néphéline-syénite.

7. Procédé selon la revendication 4, caractérisé en ce que la fritte de verre exempte d'alcalis est un verre borosilicaté.

8. Procédé selon la revendication 7, caractérisé en ce que le taux en verre borosilicaté exempt d'alcalis est de 0,2 à 20% en poids, plus particulièrement de 6 à 10% en poids du mélange de départ.

9. Procédé selon la revendication 3, caractérisé en ce que le corps cru à rechauffer contient de 0,2 à 20% en poids, notamment de 6 à 13% en poids, de fritte de verre comme fondant.

10. Procédé selon la revendication 3, caractérisé en ce que le fondant utilisé contient au moins l'un des composants stéatite, wollastonite, dolomite, marbre, carbonate de baryum et dioxyde de titane.

11. Procédé selon la revendication 3, caractérisé en ce qu'on choisit la composition du mélange des matières de départ de telle façon à ce qu'il se forme un corps en porcelaine ou en silicate d'aluminium.

12. Procédé selon la revendication 3, caractérisé en ce que le mélange des produits de départ contient au moins 50% en poids d'Al₂O₃.

13. Procédé selon la revendication 12, caractérisé en que la composition des produits de départ contient de 80 à 99% en poids, notamment de 80 à 96% en poids de Al₂O₃.

14. Procédé selon la revendication 12, caractérisé en ce qu'on choisit la composition de telle façon à ce qu'il se forme un corps en mullite.

15. Procédé selon la revendication 3, caractérisé en ce que le corps façonné est fritté à des temperatures de 1200 à 1450°C, de préférence de 1280 à 1350°C.
